**Europäisches Patentamt**

**European Patent Office**

**Office européen des brevets**

(19)

(11) Numéro de publication : **0 148 088**
**B1**

(12) ## FASCICULE DE BREVET EUROPÉEN

(45) Date de publication du fascicule du brevet :
**15.06.88**

(21) Numéro de dépôt : **84402710.2**

(22) Date de dépôt : **21.12.84**

(51) Int. Cl.⁴ : **F 16 J 15/08**

(54) **Joint d'étanchéité métallique flexible comportant des parties saillantes consommables.**

(30) Priorité : **29.12.83 FR 8321019**

(43) Date de publication de la demande :
**10.07.85 Bulletin 85/28**

(45) Mention de la délivrance du brevet :
**15.06.88 Bulletin 88/24**

(84) Etats contractants désignés :
**BE CH DE GB IT LI NL SE**

(56) Documents cités :
**FR-A- 2 300 269**
**US-A- 3 188 100**
**"KONSTRUKTIONSBÜCHE", vol. 17, 2e édition, 1975,
K. TRUTNOVSKY: "Berührungsdichtungen an ruhenden und bewegten Maschinenteilen", Springer-
Verlag, Berlin, DE;**

(73) Titulaire : **COMMISSARIAT A L'ENERGIE ATOMIQUE
31/33, rue de la Fédération
F-75015 Paris (FR)**

(72) Inventeur : **de Villepoix, Raymond
"La Chatelière"
F-26290 Donzere (FR)**
Inventeur : **Fages, Jean Lotissement
des Portes de Provence
F-26700 Pierrelatte (FR)**
Inventeur : **Forges, Robert
Les Charagons - Avenue Achille Maucuer
F-84500 Bollene (FR)**
Inventeur : **Abbes, Claude
Les Primevères 5 Montée du Crêt du Loup
F-42100 Saint Etienne (FR)**
Inventeur : **Rouaud, Christian
19, Le Genêts
F-07700 Bourg Saint Andeol (FR)**

(74) Mandataire : **Mongrédien, André et al
c/o BREVATOME 25, rue de Ponthieu
F-75008 Paris (FR)**

## Description

La présente invention se rapporte à un joint d'étanchéité métallique flexible comportant des parties saillantes consommables permettant d'obtenir rapidement une très bonne étanchéité pour un effort de serrage faible.

De façon plus précise, l'invention se rapporte à un joint d'étanchéité métallique flexible du type comprenant au moins une âme métallique élastique présentant, lorsqu'elle est au repos, la forme d'un tore, et au moins une enveloppe externe en un matériau ductile, dans laquelle est encastrée l'âme métallique, ce joint comportant sur toute sa périphérie deux surfaces d'appui opposées sensiblement planes, et au moins une partie saillante, de section sensiblement triangulaire, formée sur chacune des surfaces d'appui. Un tel joint est décrit dans le document US-A-3 188 100.

On remarquera dès à présent que l'invention peut être utilisée dans tous les joints de ce type, indépendamment de la forme du joint (rectangulaire, circulaire, oblongue, triangulaire, ovale, etc...). En outre, elle concerne aussi bien les joints à une ligne d'étanchéité que les joints à deux lignes d'étanchéité.

Dans les joints métalliques existants, l'âme élastique torique est constituée soit par un tube métallique, soit par un ressort hélicoïdal à spires jointives refermé sur lui-même. Dans ce dernier cas, la section du fil constituant le ressort peut être quelconque et notamment ronde, rectangulaire ou en segment de cercle. Le tube ou le ressort hélicoïdal, serré sur champ, confère au joint son élasticité.

D'autre part, la ou les enveloppes entourant l'âme des joints existants sont constitués de matériaux plaqués ou en feuilles minces tels que le polytétrafluoréthylène, l'aluminium, l'argent, le cuivre, le nickel, le tantale, l'acier inoxydable, le zirconium, etc...

Lorsque les joints comprennent plusieurs enveloppes, celles-ci ont chacune un rôle particulier. Ainsi, lorsque l'âme du joint est constituée par un ressort à spires jointives, l'enveloppe interne a en général un rôle de répartition de charge au niveau de chaque sommet de spire de l'âme élastique. L'enveloppe externe est réalisée quant à elle en un matériau ductile permettant, grâce à ses capacités de fluage dans les aspérités des surfaces en contact, de conférer au joint une parfaite étanchéité lorsqu'il est serré dans un assemblage. D'une manière générale, ce sont donc les propriétés plastiques des matériaux qui les constituent qui caractérisent les enveloppes du joint.

Pour plus de détail concernant la structure d'un joint d'étanchéité métallique dont l'âme est constituée par un ressort hélicoïdal à spires jointives, on se reportera au brevet FR-A-2 232 235.

L'expérience industrielle montre que les joints métalliques élastiques permettent d'obtenir une étanchéité statique particulièrement bonne et, notamment, une excellente tenue en température.

Par ailleurs, on connaît aussi des joints statiques métalliques comprenant une pièce massive, par exemple en aluminium ou en cuivre, dont les faces d'appui sont munies d'une ou plusieurs parties saillantes, de section triangulaire ou en arc de cercle. Dans les joints de ce type, généralement appelés joints massifs à couteaux, la diminution des surfaces du joint en contact avec les parties en regard de l'assemblage permet de réduire l'effort de serrage nécessaire à l'obtention de l'étanchéité souhaitée. Toutefois, ces joints présentent l'inconvénient d'être très sensibles au fluage en température, de sorte que la fiabilité de l'étanchéité n'est pas assurée.

La présente invention a précisément pour objet un joint d'étanchéité métallique flexible cumulant les avantages des joints métalliques flexibles actuels et des joints massifs à couteaux, sans en avoir les inconvénients.

A cet effet, un joint d'étanchéité métallique flexible du type défini précédemment est caractérisé en ce que les parties saillantes sont formées dans l'enveloppe externe, les dimensions des parties saillantes étant telles que ces parties disparaissent totalement sous l'effet du serrage du joint.

Selon un mode de réalisation préféré de l'invention, les surfaces d'appui et les parties saillantes sont réalisées dans l'épaisseur de l'enveloppe externe. Ainsi, ces parties peuvent être obtenues soit par un procédé d'usinage connu par enlèvement de matière, tel que le tournage, le fraisage, la rectification, le moletage, soit par un procédé tel que le matriçage, sans enlèvement de matière.

De préférence, l'angle formé en section par chacune des parties saillantes est compris entre 90° et 110°.

Bien entendu, une ou plusieurs parties saillantes peuvent être formées sur chacune des surfaces d'appui, ces parties saillantes étant disposées de façon symétrique par rapport au plan de symétrie du joint.

On décrira maintenant, à titre d'exemple non limitatif, un mode de réalisation préféré de l'invention en se référant aux dessins annexés dans lesquels :

— la figure 1 représente en coupe transversale une partie d'un joint métallique flexible réalisé conformément à l'invention,

— la figure 2 représente, également en coupe transversale, le joint de la figure 1 à la fin de son serrage dans un assemblage,

— la figure 3 est une vue à plus grande échelle montrant en coupe transversale l'une des parties saillantes du joint de la figure 1,

— la figure 4 représente les courbes caractéristiques de la variation de l'effort de serrage F (en daN/cm) en fonction de l'écrasement E (en mm), pour un joint métallique flexible selon la technique antérieure (en traits pleins) et pour un joint massif à couteaux comparable selon la technique antérieure (en traits discontinus), et

— la figure 5 représente la courbe caractéristique d'un joint métallique flexible réalisé conformément à la présente invention, tel que celui de la figure 1.

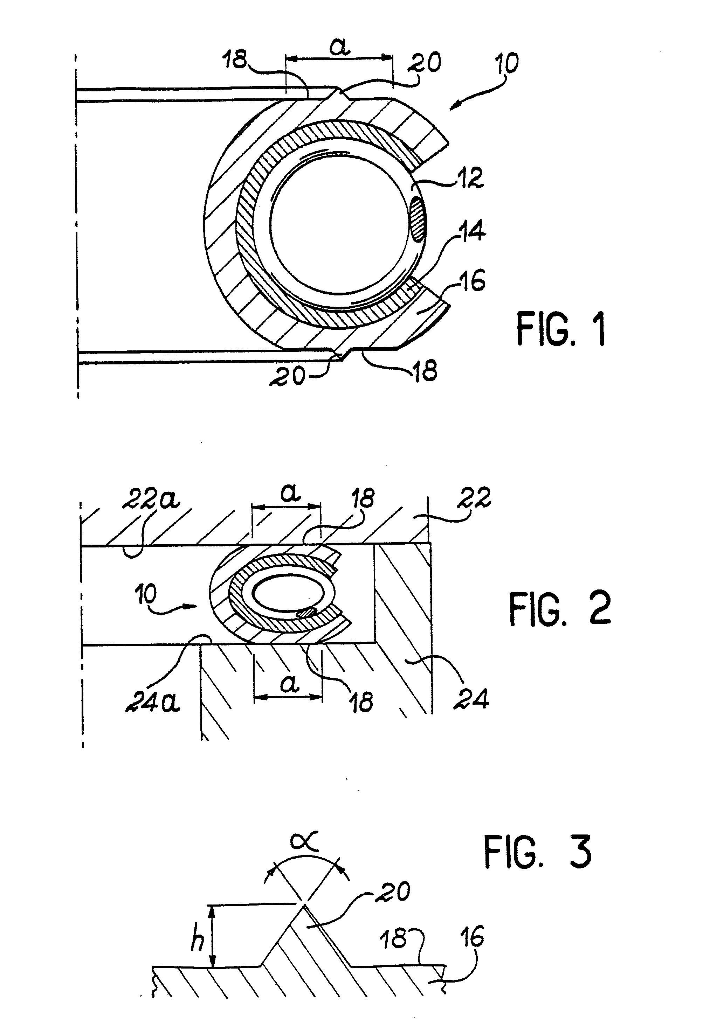

Sur la figure 1, on reconnaît les différentes parties d'un joint d'étanchéité métallique flexible dont l'âme élastique est constituée par un ressort hélicoïdal à spires jointives selon la technique antérieure. Ainsi, le joint 10 représenté sur cette figure comprend une âme constituée par un ressort hélicoïdal métallique 12, à spires jointives, refermé sur lui-même. Le ressort 12 est encastré dans une première enveloppe 14, elle-même encastrée dans une enveloppe externe 16. De façon classique, chacune des enveloppes 14 et 16 est ouverte suivant l'une des périphéries du ressort 12 constituant l'âme du joint d'étanchéité 10. Les fonctions de chacune des enveloppes 14 et 16, ainsi que la nature des matériaux qui les constitue demeurent identiques à celles des joints métalliques flexibles de la technique antérieure et ne seront donc pas décrites à nouveau.

Conformément à l'invention, des surfaces d'appui 18, sensiblement planes, parallèles entre elles et au plan de symétrie du joint 10 sont formées de chaque côté de celui-ci, de façon à pouvoir venir en appui après serrage contre les parties correspondantes d'un assemblage, comme on le verra ultérieurement.

Conformément à une caractéristique essentielle de l'invention, chacune des surfaces d'appui 18 comporte, sur toute sa périphérie, au moins une partie saillante « consommable » 20. Comme l'illustre la figure 3, chacune de ces parties saillantes 20 présente une section triangulaire ou sensiblement triangulaire dont l'angle au sommet $\alpha$ est compris, de préférence, entre 90° et 110°. La hauteur h des parties saillantes est relativement faible par rapport aux dimensions du joint, afin que ces parties « consommables » disparaissent complètement en fin de serrage. A titre d'exemple, la hauteur H peut être comprise ente 0,1 mm et 0,2 mm, si l'enveloppe externe 16 présente une épaisseur d'environ 0,3 à 0,5 mm en dehors des surfaces d'appui 18.

De préférence, les parties saillantes 20 sont disposées de façon symétrique par rapport au plan de symétrie du joint 10. De façon plus précise, les parties saillantes 20 sont diamétralement opposées par rapport au centre des cercles définis en section par les différents éléments constituant le joint 10.

Ainsi, lorsque chacune des surfaces d'appui 18 comporte une seule partie saillante 20 comme dans le mode de réalisation représenté sur la figure 1, ces parties 20 se trouvent situées au centre des surfaces d'appui 18. Lorsque deux ou trois parties saillantes sont formées sur chacune des surfaces d'appui 18, ces parties saillantes sont réparties de manière symétrique par rapport à la médiatrice du segment formée par la surface d'appui 18 dans la coupe transversale du joint de la figure 1.

Dans le cas où plusieurs parties saillantes sont formées sur chaque surface d'appui, elles présentent toutes la même hauteur h. Lorsque ces parties saillantes sont juxtaposées sur toute la longueur a de chaque surface d'appui, celle-ci est matérialisée par le plan joignant la base des parties saillantes.

De préférence, et comme le montre la figure 1, les surfaces d'appui 18 et les parties saillantes 20 sont réalisées dans l'épaisseur même de l'enveloppe externe 16. Afin de parvenir à ce résultat, on peut recourir soit à un usinage par enlèvement de matière, soit à un formage sans enlèvment de matière. Dans le premier cas, différents procédés d'usinage bien connus peuvent être employés tels que le tournage, le fraisage, la rectification, ou le moletage. Dans le deuxième cas, on aura recours à un procédé de fabrication par matriçage.

Ce dernier procédé est particulièrement avantageux, car il permet de réaliser de grandes séries rapidement, économiquement et avec une bonne reproductibilité dans la formation des parties saillantes. De plus, l'obtention des surfaces d'appui 18 et des parties saillantes 20 par matriçage s'applique à tous les types de joints, quelle que soit leur forme (circulaire ou non circulaire) et aussi bien dans le cas de joints à une ligne d'étanchéité que dans le cas de joints à deux lignes d'étanchéité.

On a représenté sur la figure 2, le joint selon l'invention, tel qu'il vient d'être décrit à titre d'exemple en se référant à la figure 1, serré entre les surfaces en vis-à-vis 22a et 24a des deux parties 22 et 24 d'un assemblage. Compte tenu des faibles dimensions des parties saillantes 20 et du caractère ductile du matériau constituant l'enveloppe externe 16, ces parties 20 disparaissent totalement en fin de serrage. Les surfaces 22a et 24a viennent alors en appui contre les surfaces d'appui 18.

Ainsi, les parties saillantes 20, « consommables » lors du serrage du joint, permettent l'obtention rapide d'une très bonne étanchéité pour un effort faible comparable à celui des joints massifs à couteaux traditionnels. En revanche, en fin de serrage, la transmission de l'effort se fait sur toute la largeur a de chacune des surfaces d'appui 18, de la même manière que s'il s'agissait d'un joint métallique flexible de conception traditionnelle. Cette largeur d'appui a entre le joint 10 et les surfaces 22a et 24a est favorable à une stabilisation du fluage de l'enveloppe externe 16 en température.

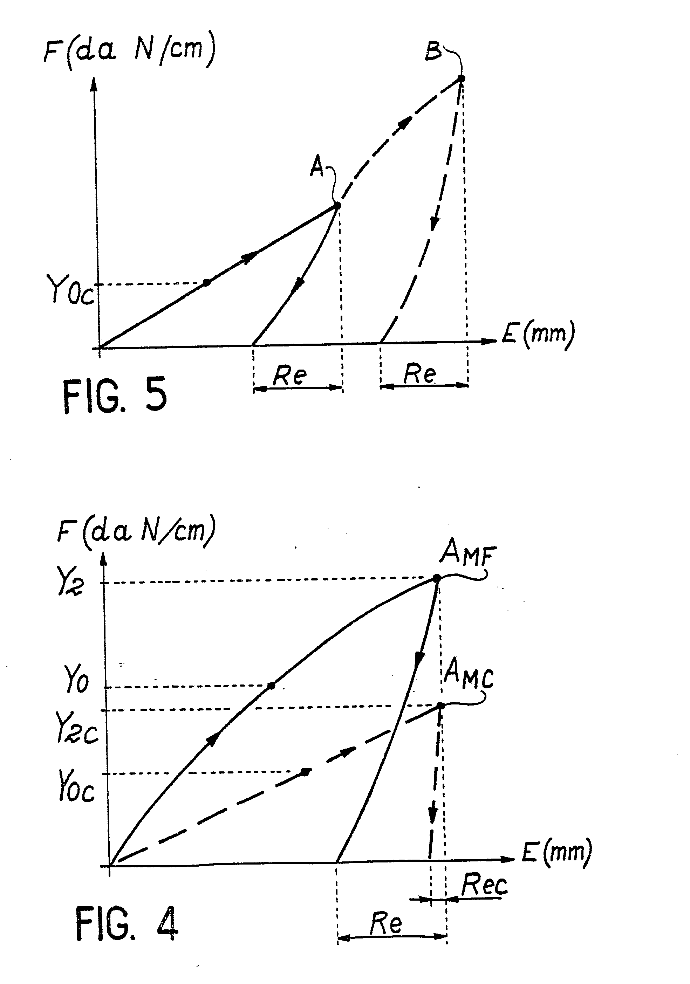

Pour mieux comprendre l'intérêt du joint métallique flexible comportant des parties saillantes conformément à l'invention, on se référera maintenant aux figures 4 et 5 qui représentent respectivement, pour la figure 4, les courbes caractéristiques d'un joint métallique flexible de l'art antérieur (en traits pleins) et d'un joint massif à couteaux comparable de l'art antérieur (en traits discontinus) et, pour la figure 5 la courbe caractéristique d'un joint métallique flexible à parties saillantes réalisé conformément à l'invention.

La comparaison de ces courbes illustre les avantages et les inconvénients respectifs de chaque solution.

Ainsi, on voit sur la figure 4 que, pour un joint métallique flexible traditionnel et un joint massif à couteaux dont les points de fonctionnement respectifs $A_{MF}$ et $A_{MC}$ sont obtenus pour une même valeur de l'écrasement E, l'effort de serrage F qui doit être appliqué sur le joint pour parvenir au point de fonctionnement est pratiquement doublé dans le cas du joint métallique flexible traditionnel (effort $Y_2$) par rapport à un joint massif à couteaux (effort $Y_{2c}$). La même remarque s'applique en ce qui concerne les efforts $Y_0$ et $Y_{0c}$ qui sont nécessaires dans les deux cas afin d'obtenir l'étanchéité de l'assemblage.

En revanche, on observe également sur la figure 4 que la restitution élastique $R_{ec}$ d'un joint massif à couteaux est pratiquement négligeable par rapport à la restitution élastique $R_e$ d'un joint métallique flexible traditionnel. Il en résulte comme on l'a déjà mentionné précédemment que ce dernier présente une grande stabilité au fluage du revêtement ductile en température, ce qui n'est pas le cas pour un joint massif à couteaux.

Si l'on se reporte maintenant à la figure 5 qui représente la courbe caractéristique d'un joint métallique flexible comportant des parties saillantes triangulaires consommables conformément à l'invention, le début de la courbe de compression est semblable au début de la courbe du joint massif à couteaux de la technique antérieure. En particulier, pour un joint comparable, le seuil d'étanchéité $Y_{0c}$ est le même que celui du joint massif à couteaux sur la figure 4. En d'autres termes, l'effort de serrage nécessaire à l'obtention de l'étanchéité et permettant de parvenir au point de fonctionnement A est très réduit par rapport au joint métallique flexible de la technique antérieure.

En poursuivant l'écrasement du joint, les parties saillantes disparaissent progressivement et les surfaces d'appui du joint viennent en contact avec les surfaces en vis-à-vis formées sur les parties correspondantes de l'assemblage. Cette situation correspond au point A sur la figure 5 qui définit le point de fonctionnement du joint d'étanchéité selon l'invention. La courbe caractéristique du joint selon l'invention correspondant au point de fonctionnement A est représentée en trait plein sur la figure 5.

Si l'on augmentait encore l'effort de serrage, on passerait du point A au point B en suivant la courbe représentée en traits discontinus sur la figure 5, qui correspond aux caractéristiques d'un joint métallique flexible selon la technique antérieure. Cette augmentation d'effort ne présente pas d'intérêt dans le cas du joint selon l'invention. En effet, comme on le voit également sur la figure 5, la restitution élastique $R_e$ est sensiblement la même lorsque le joint est utilisé au point A que lorsqu'il est utilisé au point B. Il est à noter que cette restitution élastique $R_e$ est pratiquement identique à la restitution élastique d'un joint métallique flexible traditionnel, de sorte que le joint d'étanchéité selon l'invention présente, comme ce dernier, une tenue en température très supérieure à celle d'un joint massif à couteaux.

Bien entendu, comme on l'a d'ailleurs mentionné à différentes reprises au cours de la description, l'invention n'est pas limitée au mode de réalisation qui vient d'être décrit à titre d'exemple, mais en couvre toutes les variantes. Ainsi, on a vu que l'invention peut s'appliquer aussi bien à des joints de forme circulaire qu'à des joints de forme non circulaire et qu'elle est indépendante du nombre de lignes d'étanchéité du joint. Par ailleurs, l'invention s'applique aussi bien à des joints dont l'âme métallique est constituée par un tube qu'à des joints dont l'âme est constituée par un ressort hélicoïdal à spires jointives. De même, l'invention peut être utilisée aussi bien dans un joint comportant une seule enveloppe en métal ductile que dans un joint comportant plusieurs enveloppes entourant l'âme métallique. De plus, le nombre des parties saillantes formées sur chacune des surfaces d'appui peut être quelconque et, bien que celles-ci soient réalisées de préférence dans l'épaisseur de l'enveloppe externe du joint, elles pourraient aussi être obtenues sous la forme d'une surépaisseur formée sur le joint sans sortir du cadre de l'invention.

**Revendications**

1. Joint d'étanchéité métallique flexible (10) comprenant au moins une âme métallique élastique (12) présentant, lorsqu'elle est au repos, la forme d'un tore, et au moins une enveloppe externe (16) en un matériau ductile, dans laquelle est encastrée l'âme métallique, ce joint comportant sur toute sa périphérie deux surfaces d'appui (18) opposées sensiblement planes, et au moins une partie saillante (20), de section sensiblement triangulaire, formée sur chacune des surfaces d'appui, caractérisé en ce que les parties saillantes (20) sont formées dans l'enveloppe externe (16), les dimensions ($\alpha$, h) des parties saillantes étant telles que ces parties disparaissent totalement sous l'effet du serrage du joint.

2. Joint selon la revendication 1, caractérisé en ce que les surfaces d'appui (18) et les parties saillantes (20) sont réalisées dans l'épaisseur de l'enveloppe externe (16).

3. Joint selon l'une quelconque des revendications 1 et 2, caractérisé en ce que l'angle ($\alpha$) formé en section par chacune des parties saillantes (20) est compris entre 90° et 110°.

4. Joint selon l'une quelconque des revendications 1 à 3, caractérisé en ce que lesdites parties saillantes (20) sont disposées de façon symétrique par rapport au plan de symétrie du joint.

**Claims**

1. Flexible metal sealing joint (10) comprising at least one elastic metal core (12) which, in the rest position, is shaped like a torus, as well as at least one outer envelope (16) made from a ductile material in which is inserted the metal core, said joint comprising over its entire periphery two substantially planar opposite bearing surfaces (18) and at least one projecting portion (20) with a substantially triangular cross-section formed on each of the bearing surfaces, characterized in that the projecting portions (20) are formed in the outer envelope (16) the dimensions (α, h) of the projecting portions being such that these portions disappear entirely under the locking or tightening effect of the joint.

2. Joint according to claim 1, characterized in that the bearing surfaces (18) and the projecting portions (20) are formed in the thickness of the outer envelope (16).

3. Joint according to either of the claims 1 and 2, characterized in that the angle (α) formed in section for each of the projecting portions (20) is between 90 and 110°.

4. Joint according to any one of the claims 1 to 3, characterized in that the projecting portions (20) are arranged symmetrically with respect to the plane of symmetry of the joint.

### Patentansprüche

1. Elastische Metalldichtung (10) mit wenigstens einem elastischen Metallkern (12), der, wenn er sich in Ruhe befindet, die Form eines Toreus aufweist, und wenigstens einem Außenmantel (16) aus einem duktilen Material, in dem der Metallkern eingebaut ist, wobei diese Dichtung über ihren gesamten Umfang zwei im wesentlichen ebene, einander gegenüberliegende Druckaufnahmeflächen (18) und wenigstens einen vorspringenden Teil (20) mit im wesentlichen dreieckigem Querschnitt aufweist, der an jeder der Druckaufnahmeflächen ausgebildet ist, dadurch gekennzeichnet, daß die vorspringenden Teile (20) an dem äußeren Mantel (16) ausgebildet sind und die Abmessungen (a, h) der vorspringenden Teile derart sind, daß diese Teile vollständig durch die Wirkung beim Einklemmen der Dichtung verschwinden.

2. Dichtung nach Anspruch 1, dadurch gekennzeichnet, daß die Druckaufnahmeflächen (18) und die vorspringenden Teile (20) in der Dicke des Außenmantels (16) hergestellt sind.

3. Dichtung nach einem der Ansprüche 1 oder 2, dadurch gekennzeichnet, daß der im Schnitt von jedem der vorspringenden Teile (20) gebildete Winkel (α) zwischen 90° und 110° liegt.

4. Dichtung nach irgendeinem der Ansprüche 1 bis 3, dadurch gekennzeichnet, daß die genannten vorspringenden Teile (20) symmetrisch in bezug auf die Symmetrieebene der Dichtung angeordnet sind.

FIG. 1

FIG. 2

FIG. 3

FIG. 5

FIG. 4